Europäisches Patentamt

European Patent Office

Office européen des brevets

(19)

(11) Numéro de publication : **0 119 907**
**B1**

(12)

# FASCICULE DE BREVET EUROPÉEN

(45) Date de publication du fascicule du brevet :
**27.05.87**

(51) Int. Cl.⁴ : **F 16 D 65/09**

(21) Numéro de dépôt : **84400458.0**

(22) Date de dépôt : **07.03.84**

(54) **Perfectionnement au maintien axial des segments d'un frein à tambour et segment de frein à tambour équipé d'un dispositif de maintien axial.**

(30) Priorité : **11.03.83 FR 8304044**

(43) Date de publication de la demande :
**26.09.84 Bulletin 84/39**

(45) Mention de la délivrance du brevet :
**27.05.87 Bulletin 87/22**

(84) Etats contractants désignés :
**DE FR GB IT NL SE**

(56) Documents cités :
**DE-B- 1 201 627**
**FR-A- 1 295 394**
**FR-A- 2 418 384**
**US-A- 2 466 425**
**US-A- 2 671 535**
**US-A- 3 186 520**
**US-A- 3 795 292**
**US-A- 4 361 214**

(73) Titulaire : **ALLIED CORPORATION**
**Columbia Road and Park Avenue P.O. Box 2245R**
**(Law Dept.)**
**Morristown New Jersey 07960 (US)**

**THE BENDIX CORPORATION**
**Executive Offices Bendix Center**
**Southfield Michigan 48037 (US)**

(72) Inventeur : **Bailey, Ronald D.**
**126 route de Stalingrad**
**F-93700 Drancy (FR)**
Inventeur : **Chotard, Michel**
**30 rue Alphonse Daudet**
**F-93700 Drancy (FR)**
Inventeur : **Charbonnier, Jacques**
**35-37 rue d'Alsace**
**F-92110 Clichy (FR)**

(74) Mandataire : **Le Moenner, Gabriel et al**
**SERVICE BREVETS BENDIX 44, Rue François 1er**
**F-75008 Paris (FR)**

EP 0 119 907 B1

## Description

L'invention a pour objet un dispositif de maintien axial des segments d'un frein à tambour, notamment pour véhicule automobile, et un segment de frein à tambour équipé d'un dispositif de maintien axial des segments.

L'invention concerne plus particulièrement un dispositif de maintien axial des segments d'un frein à tambour comportant un support fixe recevant en coulissement deux segments susceptibles d'être écartés au moyen d'au moins un moteur de frein disposé entre deux extrémités adjacentes desdits segments, ledit support comportant au droit de chaque segment un bras axial dont l'extrémité libre s'étend radialement vers l'extérieur, une structure de maintien étant placée entre ladite extrémité libre et ledit segment pour appliquer axialement ce dernier sur le support fixe.

Un frein de ce type est décrit dans le brevet US-A-2 466 425 dans lequel des bras axiaux se terminant par des bras radiaux tiennent le segment en appui sur le support fixe. Ce frein présente néanmoins deux inconvénients, soit la distance entre le bras et l'âme du segment est faible et nécessite des tolérances très serrées, soit le jeu entre le bras et l'âme du segment est plus important mais alors le bras maintient insuffisamment le segment et le frein peut engendrer des bruits au moment du freinage.

On a aussi proposé, dans le brevet US-A-3 186 520, un frein du type mentionné ci-dessus dans lequel le bras axial et le bras radial sont formés par des pièces rajoutées sur le support fixe, un ressort étant placé entre le bras radial et l'âme du segment de manière à plaquer celui-ci sur le support fixe. Cette solution, tout en résolvant le problème des tolérances, présente néanmoins l'inconvénient majeur que les différentes pièces sont flottantes et que la mise en place du ressort alors qu'il doit être contraint pour être efficace est particulièrement malaisée. Ceci est d'autant plus vrai si le frein se trouve sur le véhicule et que la partie centrale du frein est occupée par le moyeu de roue.

Un reproche analogue peut être formulé à l'égard du dispositif décrit dans le brevet US-A-3 795 292. Dans celui-ci, le dispositif de maintien axial des segments de frein sur le support fixe se compose d'un élément élastique et d'un élément de verrouillage exerçant une précontrainte sur ledit élément élastique, ledit élément de verrouillage étant formé par une portion centrale de l'élément élastique réalisé en fil à ressort qui comporte lui-même, de part et d'autre de cet élément de verrouillage, deux bras dont chacun comprend successivement une première zone d'appui sur l'extrémité libre du bras de support fixe et une seconde zone d'appui sur une première face de l'âme du segment de frein, et ledit élément de verrouillage s'opposant au déplacement radial vers l'extérieur dudit élément élastique par rapport à l'âme du segment de frein. Ici encore, la mise sous précontrainte de l'élément élastique du dispositif se révèle malaisée lors de la mise en place des segments sur le support fixe du frein.

La présente invention se donne pour but de proposer un dispositif de maintien axial des segments d'un frein à tambour dans lequel soient évités les inconvénients énoncés ci-dessus.

Ce but est atteint, conformément à l'invention, et dans un dispositif du genre décrit dans le brevet US-A-3 795 292, grâce au fait que l'élément de verrouillage prend appui radialement sur le bord de l'âme de segment de frein et axialement sur la seconde face de celle-ci, la précontrainte de l'élément élastique étant ainsi assurée par l'appui de ladite seconde zone sur la première face de l'âme du segment et par l'appui simultané de l'élément de verrouillage sur la seconde face de l'âme du segment de frein tant que ce dernier n'est pas mis en place sur le support, et qu'il est prévu un dispositif de déverrouillage qui, lorsque l'âme du segment de frein est engagée sous l'extrémité libre du bras du support fixe, provoque l'écartement de l'élément de verrouillage par rapport à la seconde face de l'âme du segment tout en accroissant la contrainte de l'élément élastique et en augmentant par conséquent l'effort d'appui du segment sur le support fixe.

Dans un mode avantageux de réalisation de l'invention, le dispositif de déverrouillage est agencé sur l'extrémité libre du bras du support fixe et consiste en une rampe formée sur l'extrémité libre dudit bras.

Grâce à cet agencement, l'élément élastique de maintien est mis en précontrainte sur le segment de frein lui-même avant que celui-ci soit mis en place sur le support fixe, ce qui ne soulève aucune difficulté, et la mise en place du segment sur le frein ne nécessite aucune action supplémentaire sur le dispositif de maintien ; celui-ci se déverrouille de lui-même en permettant ainsi à l'élément élastique d'exercer l'effort axial nécessaire à la mise en appui du segment sur le support fixe.

On décrira maintenant à titre d'exemple non limitatif un mode de réalisation de l'invention en se référant aux figures annexées, dans lesquelles :

la figure 1 est une vue axiale d'un frein à tambour réalisé conformément à l'invention ;

la figure 2 est une vue en coupe selon la ligne 2-2 de la figure 1 ;

la figure 3 est une vue en coupe agrandie selon la ligne 3-3 de la figure 1 ;

la figure 4 est une vue similaire à la figure 3 le segment étant présenté sur le support fixe mais pas mis en place ; et

la figure 5 est une vue axiale agrandie de l'élément élastique de maintien axial représenté sur la figure 1.

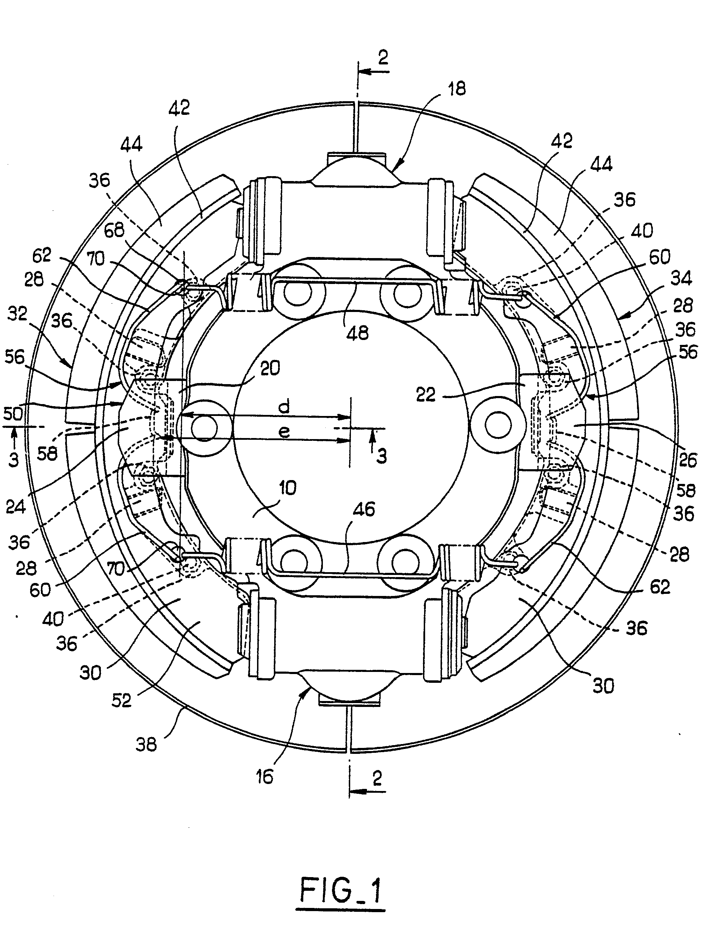

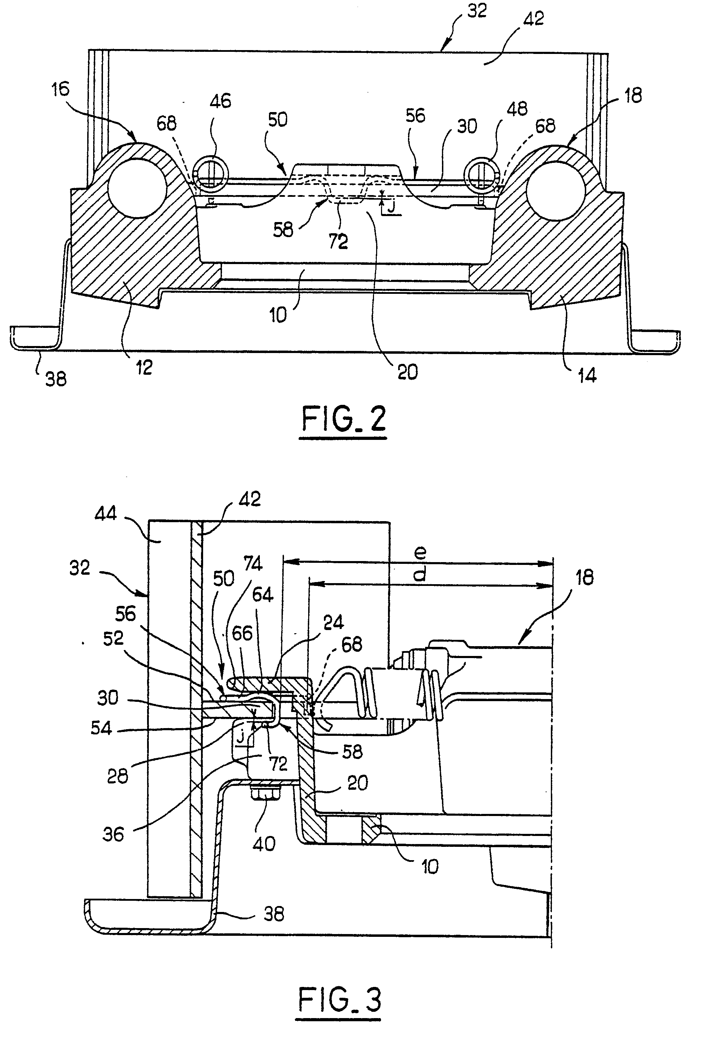

Le frein à tambour représenté sur les dessins comporte un support fixe 10 prévu pour être associé à une partie fixe du véhicule (non représentée) et constitué, dans le mode de réalisation
représenté, par une pièce de fonderie comportant
un certain nombre de bossages. En se reportant à
la figure 2, on voit que deux de ces bossages 12
et 14 forment les corps de deux moteurs de frein
16 et 18 placés diamétralement sur le support
fixe. Deux autres bossages 20 et 22 également
diamétralement espacés mais selon un diamètre
perpendiculaire aux bossages 16 et 18, forment
deux bras axiaux (20, 22) dont les extrémités
libres 24 et 26 s'étendent radialement vers l'extérieur. En se reportant aux figures 1 et 3 on voit
que le support fixe comporte deux autres séries
de bossages, une première série 28 destinée à
supporter les âmes 30 de deux segments 32 et 34
et une deuxième série de bossages 36 destinée à
supporter une plaque de protection 38 vissée sur
les bossages 36 au moyen de vis 40. En se
reportant à la figure 1, on voit que les segments
32 et 34 outre l'âme 30 comportent une jante
arquée 42 sur laquelle est fixée une garniture de
friction 44. Les segments 32 et 34 sont placés de
part et d'autre des moteurs de frein 16 et 18 sur
lesquels ils sont appliqués au moyen de ressorts
46 et 48 respectivement.

Conformément à l'invention, chacun des
segments 32 et 34 comportent une structure de
maintien désignée dans son ensemble par la
référence 50. En désignant par 52 une première
face de l'âme 30, visible sur la figure 1, et par 54
l'autre ou deuxième face de l'âme 30 on voit que
cette deuxième face 54 repose sur les bossages
28 alors que la première face 52 est placée en vis-
à-vis de l'extrémité libre 24 du bras 20, ceci en se
référant à la figure 3. Il est bien évident que le
segment 34 est monté de façon similaire mais
symétrique. La structure de maintien 50 comporte
un élément élastique 56 formé dans le mode de
réalisation représenté par un ressort en fil à
ressort. En se reportant aux figures 1 à 5, on voit
que le ressort 56 est formé par une portion
centrale 58 à laquelle sont raccordés de part et
d'autre deux bras 60 et 62 symétriques chacun
d'eux comportant une première zone d'appui 64
coopérant avec le bras libre 24 et une seconde
zone d'appui 66 coopérant avec la première face
52 de l'âme 30. Enfin, les extrémités libres des
bras 60 et 62 présentent des portions repliées 68
qui pénètrent dans des perçages 70 formés dans
l'âme 30 des segments 32 et 34. En se reportant
aux figures 1 et 3, on voit que la ligne qui rejoint
les deux portions repliées 68 est située à une
distance d du centre du frein inférieure à la
distance e entre le centre du frein et la portion
centrale 58 de l'élément élastique 56. En se
référant aux figures 2 et 3, on voit que la portion
centrale 58 de l'élément élastique 56 présente la
forme d'un U dans un plan axial, U dont la
branche centrale 72 est repliée radialement vers
l'extérieur de façon à prendre en chape, sans la
serrer, l'âme 30 du segment 32 formant ainsi
élément de verrouillage. Comme on le voit sur la
figure 3, l'extrémité libre 24 présente sur sa face
placée en vis-à-vis de l'âme 30 une rampe 74 qui s'éloigne de la face 52 de l'âme 30 au fur et à
mesure qu'on s'éloigne radialement du centre du
frein. En désignant par j, le jeu existant entre la
branche 72 du ressort 56 et la deuxième face 54
de l'âme 30 lorsque le segment est mis en place,
la pente de la rampe 74 sera définie de manière à
ce que sa dépouille soit supérieure à j.

Le frein qui vient d'être décrit à l'aide des
figures 1 à 5 se monte de la façon suivante :

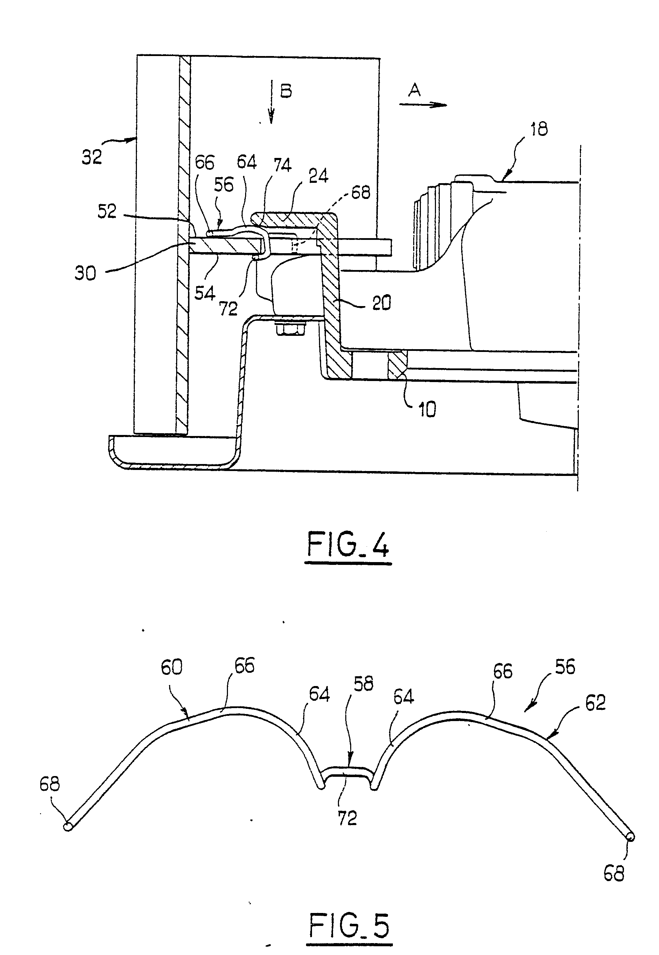

Le support fixe 10 est préalablement équipé
des moteurs de frein 16 et 18. Le support fixe 10
est préalablement équipé de la plaque de protection 38 montée à l'aide des vis 40 sur les bossages
36, il est également possible de procéder au
montage de la plaque de protection 38 après la fin
de l'assemblage du frein. On procède alors au
montage des ressorts 56 sur les segments 32 et
34, ceux-ci ayant été préalablement équipés des
garnitures 44. Le montage des ressorts 56 sur les
segments se fait de la façon suivante : une des
portions repliées 68 est introduite dans un des
perçages 70. On approche alors la portion centrale 58 de l'âme du segment de manière à ce que
la portion 72 après compression axiale du ressort
56 passe sous l'âme du segment. On met en place
l'autre portion repliée 68 dans le deuxième perçage 70, ceci d'une part en comprimant axialement le ressort 56 et d'autre part comme la
distance entre les deux portions 68 est supérieure
à la distance des deux perçages 70, il est nécessaire d'appliquer un effort circonférentiel sur le
ressort 56. Cet effort circonférentiel garantit le
positionnement de la portion centrale 58 en appui
sur l'âme 30 du segment, ceci du fait que la
distance d définie précédemment est inférieure à
la distance e également définie ci-dessus. On
procède alors à la mise en place du segment sur
le support fixe 10. En se référant à la figure 4 où
le segment est approché mais pas encore mis en
place, on voit le ressort 56 précontraint sur le
segment 32 ; en effet la portion 72 de verrouillage
est maintenue au contact de la face 54 de l'âme
30, la seconde zone 66 étant elle en contact avec
la face 52 de l'âme 30. Comme on le voit bien sur
la figure 4, la première zone d'appui 64 est prête
à s'engager sous la rampe 74 mais ne peut
s'engager librement sous l'extrémité libre 24. En
poussant le segment 32 dans le sens de la flèche
A de la figure 4 dans un premier temps la première zone d'appui 64 vient en contact avec la
rampe 74. Un déplacement supplémentaire dans
la direction de la flèche A comprime le ressort 56
dans la direction de la flèche B du fait de la rampe
74 formée sur l'extrémité libre 24. La portion 72
du ressort 56 décolle donc de la face 54 de l'âme
30 au fur et à mesure de l'enfoncement du
segment dans le sens de la flèche A jusqu'à
présenter le jeu j entre ce bras 72 et la face 54.
L'effort de plaquage du segment 32 sur le bossage
28 se compose donc de deux efforts, un premier
correspondant à la précontrainte de ce ressort
défini par le verrouillage initial du ressort 56 sur
l'âme 30 et un deuxième correspondant à la
flexion supplémentaire engendrée par la rampe
74 lors du montage du segment.

On constate donc que dans un premier temps le ressort 56 était monté précontraint sur l'âme 30 au moyen de l'élément de verrouillage 58 et que grâce à l'extrémité libre 24 et plus précisément à la rampe 74 formée sur cette extrémité libre, d'une part l'élément de verrouillage devient inopérant lorsque le segment est mis en place faisant ainsi office de dispositif de déverrouillage, et d'autre part cette rampe 74 augmente l'effort d'appui du segment sur son support fixe. Lors de l'enfoncement du segment dans le sens de la flèche A (voir figure 4) les frottements qui apparaissent entre le ressort 56 et l'extrémité libre 24 du bras 20 tendent à déplacer le ressort par rapport à l'âme 30 dans le sens inverse de la flèche A. Sous l'effet de ce frottement les deux branches axiales du U de la portion centrale 58 s'appuient sur la tranche de l'âme 30 et confirment la distance e définie ci-dessus rendant impossible tout déplacement radial accidentel du ressort 56.

Lorsque les deux segments 32 et 34 sont ainsi mis en place, on procède d'une façon conventionnelle au montage des ressorts 46 et 48 qui maintiennent les deux segments 32 et 34 en appui sur les deux moteurs de frein 16 et 18.

De la description qui précède, on comprend que le montage des segments est ainsi considérablement simplifié, le montage des ressorts 56 sous précontrainte ayant été réalisé lorsque le segment est facilement accessible et le montage du segment sur le support fixe ne nécessitant aucune intervention complémentaire au niveau des dispositifs de maintien qui deviennent normalement opérants simplement par leur mise en place sous les extrémités libres 24 des bras 20.

Il est bien évident que l'invention n'est pas limitée au mode de réalisation décrit et que le frein et l'élément élastique 56 peuvent subir des modifications de forme sans sortir du cadre de la présente invention. En particulier l'élément de verrouillage 72 peut être réalisé d'une façon différente et faire partie par exemple de l'âme 30 du segment maintenant axialement sous précontrainte une portion du ressort 56.

## Revendications

1. Dispositif de maintien axial des segments d'un frein à tambour comportant un support fixe (10) recevant en coulissement deux segments (32, 34) susceptibles d'être écartés au moyen d'au moins un moteur de frein (16, 18) disposé entre deux extrémités adjacentes desdits segments, ledit support (10) comportant au droit de chaque segment (32, 34) un bras axial (20, 22) dont l'extrémité, libre (24, 26) s'étend radialement vers l'extérieur, une structure de maintien (50) étant placée entre ladite extrémité libre et ledit segment pour appliquer axialement ce dernier sur le support fixe, ladite structure de maintien (50) se composant d'un élément élastique (56) et d'un élément de verrouillage (58) exerçant une précontrainte sur ledit élément élastique (56) lorsque le segment (32, 34) n'est pas monté sur le support fixe (10), ledit élément de verrouillage étant formé par une portion centrale de l'élément élastique réalisé en fil à ressort qui comporte lui-même, de part et d'autre de cet élément de verrouillage (58), deux bras (60, 62) dont chacun comprend successivement une première zone d'appui (64) sur l'extrémité libre (24, 26) du bras de support fixe et une seconde zone d'appui (66) sur une première face (52) de l'âme (30) du segment de frein, et ledit élément de verrouillage (58) s'opposant au déplacement radial vers l'extérieur dudit élément élastique (56) par rapport à l'âme (30) du segment de frein, caractérisé en ce que l'élément de verrouillage (58) prend appui radialement sur le bord de l'âme (30) du segment de frein et axialement sur la seconde face (54) de celle-ci, la précontrainte de l'élément élastique (56) étant ainsi assurée par l'appui de ladite seconde zone (66) sur la première face (52) de l'âme du segment et par l'appui simultané de l'élément de verrouillage (58) sur la seconde face (54) de l'âme du segment de frein tant que ce dernier n'est pas mis en place sur le support, et en ce qu'est prévu un dispositif de déverrouillage qui, lorsque l'âme du segment de frein est engagée sous l'extrémité libre (24, 26) du bras (20, 22) du support fixe, provoque l'écartement de l'élément de verrouillage (58) par rapport à la seconde face (54) de l'âme du segment tout en accroissant la contrainte de l'élément élastique (56) et en augmentant par conséquent l'effort d'appui du segment (32, 34) sur le support fixe (10).

2. Dispositif de maintien axial des segments selon la Revendication 1, caractérisé en ce que le dispositif de déverrouillage est agencé sur l'extrémité libre (24, 26) du bras (20, 22) du support fixe.

3. Dispositif de maintien axial des segments selon la Revendication 2, caractérisé en ce que le dispositif de déverrouillage consiste en une rampe (74) formée sur l'extrémité libre (24, 26) dudit bras.

4. Dispositif de maintien axial des segments selon l'une des Revendications 1 à 3, caractérisé en ce que l'élément élastique (56) se termine par des extrémités (68) repliées qui pénètrent dans des perçages (70) formés dans l'âme (30) du segment (32, 34), la ligne reliant les deux extrémités repliées (68) se trouvant à une distance (d) du centre du frein inférieure à la distance radiale (e) de l'élément de verrouillage (58).

## Claims

1. Device for axially holding segments of a drum brake comprising a fixed support (10) slidingly receiving two segments (32, 34) adapted to be spread by means of at least one brake motor (16, 18) disposed between two adjacent extremities of said segments, said support (10) comprising at each segment (32, 34) an axial arm (20, 22) having a free end (24, 26) extending radially outwards, a holding structure (50) being disposed between said free end and said segment for axially urging the latter against the fixed support, said holding structure (50) comprising a resilient element (56) and a locking element (58) exerting a bias upon said resilient element (56) when the segment (32, 34) is not mounted to the fixed support (10), said locking element being formed by a central portion of the resilient element made of a spring wire, which itself comprises on opposite sides of said locking element (58) two arms (60, 62), each of which comprises successively a first zone (64) for engaging the free end (24, 26) of the arm of the fixed support and a second zone (66) for engaging a first face (52) of the web (30) of the brake segment, and said locking element (58) opposing a radial displacement of said resilient element (56) outwards with respect to the web (30) of the brake segment, characterized in that the locking element (58) engages radially the edge of the web (30) of the brake segment and axially the second face (54) thereof, the bias of the resilient element (56) thus being assured by engagement of said second zone (66) with the first face (52) of the web of the segment and by simultaneous engagement of the locking element (58) with the second face (54) of the web of the brake segment as long as the latter is not mounted on the support, and in that there is provided a dislocking device which, when the web of the brake segment engages under the free end (24, 26) of the arm (20, 22) of the fixed support, causes the spreading of the locking element (58) with respect to the second face (54) of the web of the segment while increasing the bias of the resilient element (56) and consequently increasing the force of engagement of the segment (32, 34) with the fixed support (10).

2. Device for axially holding segments according to claim 1, characterized in that the dislocking device is effective on the free end (24, 26) of the arm (20, 22) of the fixed support.

3. Device for axially holding segments according to claim 2, characterized in that the dislocking device comprises a ramp (74) formed on the free end (24, 26) of said arm.

4. Device for axially holding segments according to any of claims 1 to 3, characterized in that the resilient element (56) terminates by rebent extremities (68) which enter into bores (70) formed in the web (30) of the segment (32, 34), the line connecting the two rebent extremities (68) being spaced from the brake center by a distance (d) which is smaller than the radial distance (e) from the locking element (58).

## Patentansprüche

1. Vorrichtung zum axialen Festlegen der Bremsbacken einer Trommelbremse mit einem Bremsschild (10), der gleitend zwei Bremsbacken (32, 34) aufnimmt, die mittels eines Bremsmotors (16, 18) auseinanderbewegbar sind, welcher zwischen zwei benachbarten Enden der Bremsbacken angeordnet ist, wobei der Bremsschild (10) an der Stelle jedes Bremsbackens (32, 34) einen axialen Arm (20, 22) aufweist, dessen freies Ende (24, 26) sich radial nach außen erstreckt, wobei eine Haltestruktur (50) zwischen dem besagten freien Ende und dem besagten Bremsbacken angeordnet ist, um den letzteren axial gegen den Bremsschild zu drücken, wobei sich die Haltestruktur (50) zusammensetzt aus einem elastischen Element (56) und einem Verriegelungselement (58), das eine Vorspannung auf das elastische Element (56) ausübt, wenn der Bremsbacken (32, 34) nicht am Bremsschild (10) montiert ist, wobei das Verriegelungselement von einem zentralen Abschnitt des aus einem Federdraht bestehenden elastischen Elementes gebildet wird, welcher seinerseits beidseitig zu dem Verriegelungselement (58) zwei Arme (60, 62) aufweist, von denen jeder aufeinanderfolgend einen ersten Angriffsbereich (64) zum Angreifen am freien Ende (24, 26) des Arms des Bremsschildes und einen zweiten Angriffsbereich (66) zum Angreifen an einer ersten Fläche (52) des Steges (30) des Bremsbackens aufweist, und wobei das Verriegelungselement (58) einer radialen Verschiebung des elastischen Elements (58) nach außen bezüglich des Steges (30) des Bremsbackens entgegenwirkt, dadurch gekennzeichnet, daß das Verriegelungselement (58) radial an dem Rand des Steges (30) des Bremsbackens und axial an der zweiten Fläche (34) desselben angreift, wobei die Vorspannung des elastischen Elementes (56) durch Angreifen des zweiten Angriffsbereiches (66) an der ersten Fläche (52) des Bremsbackensteges und durch gleichzeitiges Angreifen des Verriegelungselementes (58) an der zweiten Fläche (54) des Steges des Bremsbackens auf diese Weise sichergestellt wird, solange der letztere noch nicht am Bremsschild angebracht ist, und daß eine Entriegelungsvorrichtung vorgesehen ist, die, wenn der Steg des Bremsbackens unter das freie Ende (24, 26) des Armes (20, 22) des Bremsschildes greift, das Verriegelungselement (58) von der zweiten Fläche (54) des Bremsbackensteges wegbewegt, während sie die Spannung des elastischen Elements (56) erhöht und somit die den Bremsbacken (32, 34) am Bremsschild (10) andrückende Kraft vergrößert.

2. Vorrichtung nach Anspruch 1, dadurch gekennzeichnet, daß die Entriegelungsvorrichtung am freien Ende (24, 26) des Armes (20, 22) des Bremsschildes wirksam ist.

3. Vorrichtung nach Anspruch 2, dadurch gekennzeichnet, daß die Entriegelungsvorrichtung aus einer Rampe (74) besteht, die am freien Ende (24, 26) des besagten Armes gebildet ist.

4. Vorrichtung nach einem der Ansprüche 1-3, dadurch gekennzeichnet, daß das elastische Element (56) in umgebogenen Enden (68) ausläuft, die in Bohrungen (70) im Steg (30) des Bremsbackens (32, 34) greifen, wobei die die beiden umgebogenen Enden (68) verbindende Linie von der Bremsmitte einen Abstand (d) hat, der kleiner ist als der radiale Abstand (e) vom Verriegelungselement (58).

FIG_1

## FIG. 2

## FIG. 3

FIG. 4

FIG. 5